# EUROPEAN PATENT SPECIFICATION

(11) **EP 2 597 134 B1**
(45) Date of publication and mention of the grant of the patent: **02.10.2019**
(21) Application number: 12193960.7
(22) Date of filing: 23.11.2012
(51) Int. Cl.: C09K 19/56, C09K 19/36, C09K 19/04, C09K 19/12

(54) **Alignment layer, liquid crystal display device, and method for manufacturing the same**
Ausrichtungsschicht, Flüssigkristallanzeigevorrichtung und Herstellungsverfahren dafür
Couche d'alignement, dispositif d'affichage à cristaux liquides et son procédé de fabrication

(30) Priority: 23.11.2011 KR 20110122931
(43) Date of publication of application: 29.05.2013
(73) Proprietor: Samsung Display Co., Ltd., Gyeonggi-do (KR)
(72) Inventor: Jeong, Seung-Yeon, 446-711 Giheung-gu, Yongin-si, (KR); Lee, Taek-Joon, 446-711, Yongin-si, (KR); Kong, Tae-Jin, 446-711 Giheung-gu, Yongin-si, (KR); Kim, Min-Su, 446-711 Giheung-gu, Yongin-si, (KR); Nam, Seung-Wook, 446-711 Giheung-gu, Yongin-si, (KR); Park, Kyung-Ho, 446-711 Giheung-gu, Yongin-si, (KR)
(74) Representative: Dr. Weitzel & Partner

(56) References cited:
- EP-A1- 1 498 468
- EP-A2- 0 884 626
- WO-A2-2008/143470
- JP-B2- 2 972 514
- US-A1- 2009 325 453
- US-A1- 2011 242 468

## Description

### BACKGROUND

### FIELD

Exemplary embodiments of the present invention relate to an alignment layer, a liquid crystal display device, and a method for manufacturing the same.

### DISCUSSION OF THE BACKGROUND

In general, a liquid crystal display device may be classified as a twisted nematic (TN) mode, an in-plane switching (ISP) mode, a vertically aligned (VA) mode, and others according to the characteristics of its liquid crystal layer. A patterned vertically aligned (PVA) mode, which is a type of vertically aligned mode, has been developed to achieve a wide viewing angle. In addition, a micro-slit mode or a super vertical alignment (SVA) mode has been developed to further improve side visibility. In the SVA mode, a reactive mesogen is included in a liquid crystal layer in order to align liquid crystal molecules. The reactive mesogen included in a liquid crystal layer may be photocured to pretilt liquid crystal molecules. A reactive mesogen that is not photocured, that is, an uncured reactive mesogen, may cause various defects in a liquid crystal display device. In order to reduce the amount of such an uncured reactive mesogen, an alignment layer material has been developedthat includes a photocuring agent having a function similar to that of a reactive mesogen. The alignment layer material including a photocuring agent is formed into an alignment layer, which aligns liquid crystal molecules to be pretilted, by various manufacturing methods and conditions. The alignment layer formed in this way has a great influence on the display quality of a liquid crystal display device, such as defects in texture, defects in light leakage, and a low response time in a liquid crystal display device.

Diktat US 2009/325453 A1 discloses an alignment layer as per the preamble of claim 1. The document is quiet regarding the limitations as per the characterizing portion of claim 1. Therefore, the teaching of the document does not provide the technical effect of the invention, i.e. to suppress excessive phase separation into polyimide and polyethylene portions.

EP 1 498 468 A1 as well as US 2011/242468 A1 do not comprise any hint to solve the problem underlying the present invention.

WO 2008/143470 A2 discloses a polymerizable liquid crystal composition and optical film. It also does not solve the problem underlying the present invention, and it is still further away therefrom.

It is the object of the invention to provide an alignment layer as per the preamble of claim 1 avoiding successive phase separation into polyimide and polyethylene portions. Further, in order to reduce the texture and light leakage defects or improve the uniformity of display quality, there is a need for an alignment layer that aligns liquid crystal molecules to be uniformly pretilted. Further, in order to increase the response time of a liquid crystal display device, there is a need to optimize functional groups included in an alignment layer. Further, in order to improve the reliability and characteristics of an alignment layer, there is a need for an optimal alignment layer manufacturing process. Therefore, it is the object of the invention to provide an alignment layer as per the preamble of claim 1 capable of avoiding an excessive phase separation into polyimide and polyethylene portions. The object will be achieved by the characterizing portion of claim 1.

### SUMMARY

Exemplary embodiments of the present invention provide an alignment layer, which aligns liquid crystal molecules to be uniformly pretilted.

Exemplary embodiments of the present invention also provide a liquid crystal display device and a manufacturing method thereof, which can reduce texture and light leakage defects, and can improve a response time and the uniformity of display quality.

Additional features of the invention will be set forth in the description which follows, and in part will be apparent from the description, or may be learned by practice of the invention.

An exemplary embodiment of the present invention discloses an alignment layer comprising: a first substance for forming a first main chain and a second substance for forming a second main chain on a substrate. The first substance may be bonded to photocuring agents and the second substance may be bonded to vertical alignment groups, the photocuring agents being crosslinked to each other and being aligned to be tilted at a pretilt angle with respect to the substrate, the vertical alignment groups being substantially aligned vertical to the substrate, and the first and second substances being different from each other.

An exemplary embodiment of the present invention also discloses an alignment layer comprising photocuring agents bonded to a first main chain comprising polyethylene on a substrate. The photocuring agents may be crosslinked to each other and aligned to be tilted at a pretilt angle with respect to the substrate.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.
FIG. 1 is a flowchart illustrating steps in a method of manufacturing a liquid crystal display panel assembly of an SC-VA mode by using upper and lower display panels, according to an exemplary embodiment of the present invention.
FIG 2A, 2B, 2C, 2D, and 2E are sectional views sequentially illustrating processes of forming a surface photocuring agent layer and a main alignment layer of a liquid crystal display panel assembly of an SC-VA mode according to an exemplary embodiment of the present invention.
FIG. 3 is a diagram illustrating a waveform for supplying a DC voltage to a liquid crystal display panel assembly, according to an exemplary embodiment of the present invention.
FIG. 4 is a diagram illustrating a waveform for supplying a multi-step voltage to a liquid crystal display panel assembly, according to an exemplary embodiment of the present invention.
FIG. 5 is a view illustrating scanning electron microscope (SEM) images obtained by photographing one pixel of a liquid crystal display device of an SC-VA mode according to the level of voltage and according to an exemplary embodiment of the present invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements. Further, although numerical limitations are provided in the specification, it should be noted that such numerical limitations are only by way of example so long as they are not disclosed in the appended claims. Further, in the following description of the present invention, a detailed description of known functions and configurations incorporated herein will be omitted when it may make the subject matter of the present invention rather unclear.

It will be understood that when an element or layer is referred to as being "on" or "connected to" another element or layer, it can be directly on or directly connected to the other element or layer, or intervening elements or layers may be present. In contrast, when an element is referred to as being "directly on" or "directly connected to" another element or layer, there are no intervening elements or layers present. It will be understood that for the purposes of this disclosure, "at least one of X, Y, and Z" can be construed as X only, Y only, Z only, or any combination of two or more items X, Y, and Z (e.g. XYZ, XYY, YZ, ZZ).

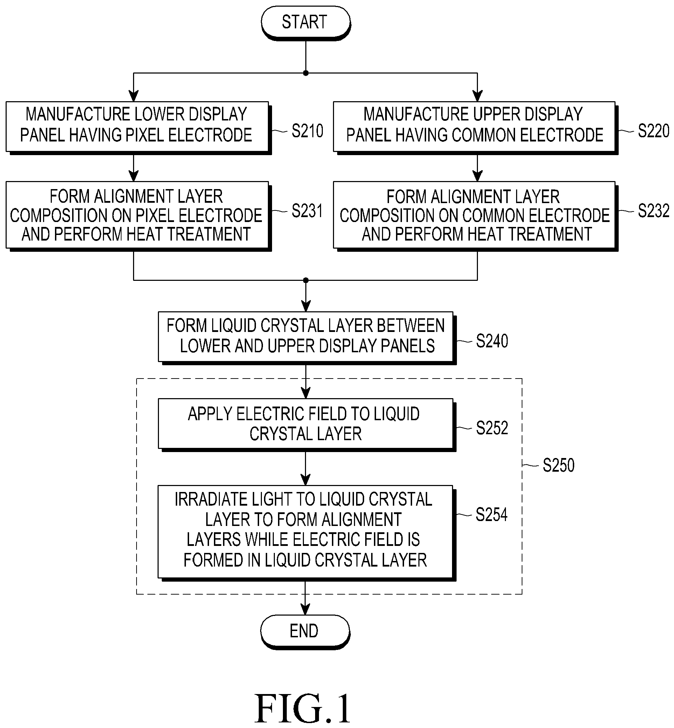

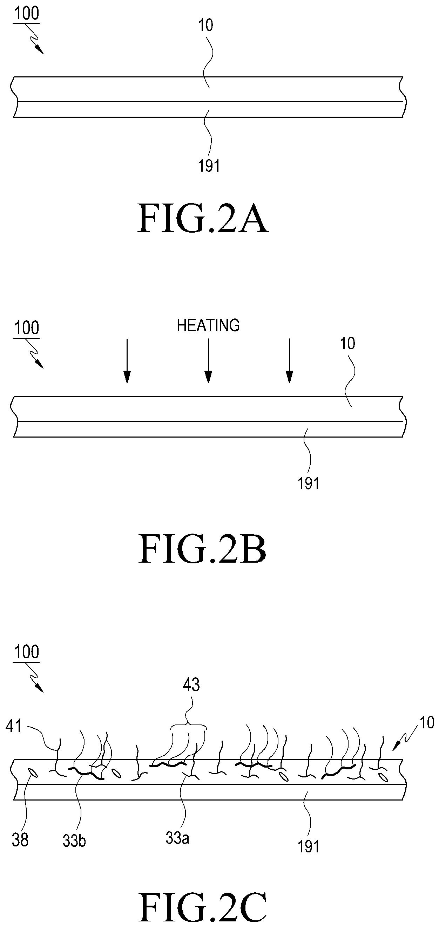

Hereinafter, an alignment layer composition 10 including polyethylene or ethylene will be described in detail. Herein, all weight percentages refer to the total weight of a corresponding composition. The alignment layer composition 10 is a material for forming an alignment layer of a liquid crystal display device with reference to FIGS. 1 and 2A to 2E. The alignment layer composition 10 has a main chain consisting of polyethylene. According to various exemplary embodiments of the present invention, the alignment layer composition 10 includes about 2 wt % to about 10 wt % of solid contents and about 90 wt % to about 98 wt % of solvent. The solid contents include a vertical alignment group compound and a pretilt-inducing group compound. The solid contents may further include a crosslinker. The amount of the vertical alignment group compound, the amount of the pretilt-inducing group compound, and the amount of the crosslinker included in the alignment layer composition 10 excluding the solvent may be about 57 wt % to about 77 wt %, about 15 wt % to about 30 wt %, and about 5 wt % to about 15 wt % respectively. The solvent may be a mixed solvent of N-vinylpyrrolidone (NMP) and butyl cellulose which are mixed at a ratio of about 1:1. The amount of the solid contents may vary according to methods of coating a lower layer with the alignment layer composition 10 in order to form an alignment layer. For example, the solid contents of an alignment layer composition 10 for use in an inkjet method may be less than that of an alignment layer composition 10 for use in a roll printing method.

The vertical alignment group compound refers to a compound including vertical alignment groups bonded to polyamic acid. The polyamic acid is a precursor of a polyimide constituting the main chain of the alignment layer. The vertical alignment group compound may be formed by the reaction of a dianhydride-based monomer and a diamine-based monomer. According to an exemplary embodiment of the present invention, the diamine-based monomer may include an aromatic diamine-based monomer, such as a para-phenylenediamine monomer, and a vertical alignment group substituted aromatic diamine-based monomer, such as a cholesteryl benzenediamine monomer. According to an exemplary embodiment of the present invention, the amount of the dianhydride-based monomer, the amount of the diamine-based monomer, and the amount of the vertical alignment group substituted aromatic diamine-based monomer included in the vertical alignment group compound excluding the solvent may be about 40 mol % to about 60 mol %, about 30 mol % to about 50 mol %, and about 5 mol % to about 20 mol %, respectively.

According to an exemplary embodiment of the present invention, the dianhydride-based monomer may include an alicyclic dianhydride-based monomer. The dianhydride-based monomer may include a monomer represented by any one of Formulas D1-I to D1-IV-2 below. The dianhydride-based monomer can make a polymer included in the vertical alignment group compound highly soluble in the solvent, and can strengthen the electro-optical characteristics of the alignment layer. The dianhydride-based monomer forms the polyimide main chain of the alignment layer by imidization in the process of forming the alignment layer.

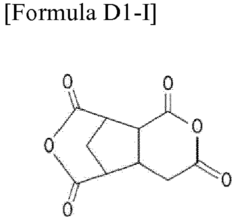

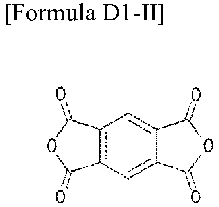

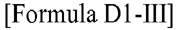

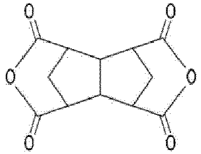

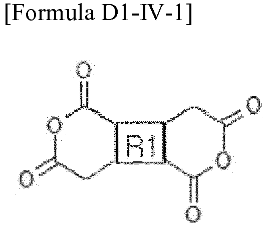

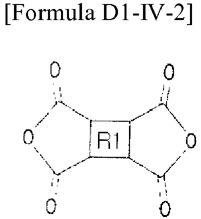

In Formulas D1-IV-1 and D1-IV-2, R1 may be any one of

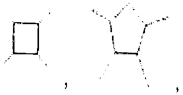

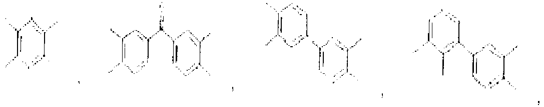

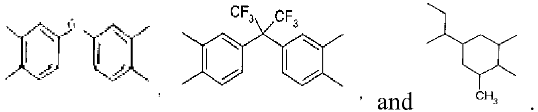

The aromatic diamine-based monomer may include a monomer represented by Formula D2-I below. The aromatic diamine-based monomer can make the polymer included in the vertical alignment group compound highly soluble in the solvent. The aromatic diamine-based monomer forms the polyimide main chain of the alignment layer by imidization in the process of forming the alignment layer.

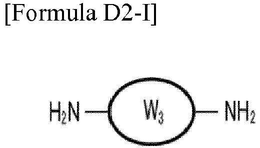

In Formula D2-I, W3 may be any one of

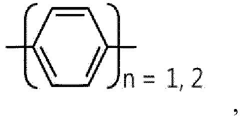

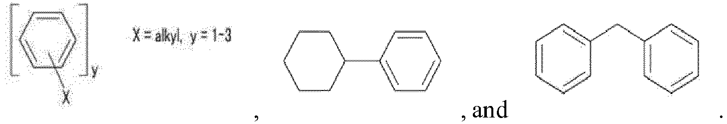

The vertical alignment group substituted aromatic diamine-based monomer may be a monomer represented by Formula D3-I below. The vertical alignment group substituted aromatic diamine-based monomer includes vertical alignment groups for vertically aligning liquid crystal molecules with respect to a lower surface. The vertical alignment groups may include an alkyl benzene group, a cholesteric group, an alkylated alicyclic group, or an alkylated aromatic group. The vertical alignment group substituted aromatic diamine-based monomer strengthens the thermal and chemical resistance of the alignment layer by imidization. According to an exemplary embodiment of the present invention, the vertical alignment group substituted aromatic diamine-based monomer may include a monomer obtained by bonding vertical alignment groups to diamino benzoic acid (DABA), for example, cholesteryl benzenediamine.

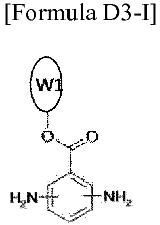

In Formula D3-I, W1 may be a vertical alignment group represented by any one of Formulas D3-I-V1 to D3-I-V4 below.

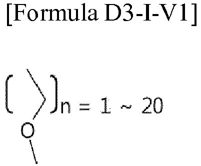

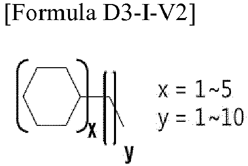

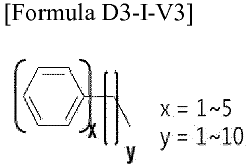

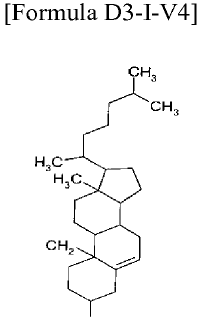

The pretilt-inducing group compound may include polyethylene constituting a main chain and photocuring agents constituting side chains. In order to form the pretilt-inducing group compound, ethylene and a monomer including photocuring agents may be bonded in a number ratio of about 0.8 to 1. Because polyethylene is formed of short-chain-length monomer units, more photocuring agents may be linked to the polyethylene main chain. As described below, the photocuring agents are cured by light irradiation in the process of forming the alignment layer, and can align liquid crystal molecules at a certain pretilt angle. Accordingly, if the photocuring agents are more densely linked to the polyethylene main chain, then liquid crystal molecules can be more uniformly aligned by photocuring the photocuring agents at a high density. Because the density of the photocuring agents is high, more photocuring agents can be crosslinked to each other during curing or polymerization. This can increase the crosslinking rate of the photocuring agents. Accordingly, a liquid crystal display device including photocuring agents can have good quality. The monomer unit refers to a monomer repeated in polyethylene.

According to an exemplary embodiment of the present invention, each of the photocuring agents bonded to polyethylene includes a photoreactive group portion and a spacer portion. The spacer portion may be comparatively rigid. According to an exemplary embodiment of the present invention, the spacer portion may include a cyclic compound. The rigid spacer portion can inhibit heat-curing of the photocuring agent such as, for example, primary or secondary heating as described below. The photoreactive group portion is a portion that is polymerized, crosslinked, or cured by light or heat.

The photoreactive group portion may be any one of 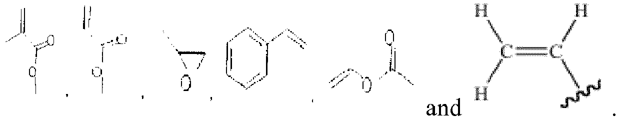 The spacer may include one or more of 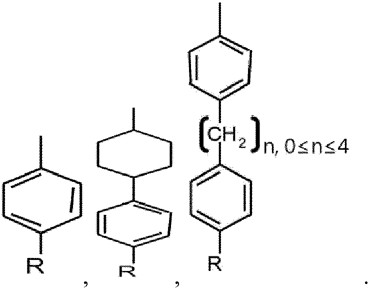 Here, R is an ester group or O. According to an exemplary embodiment of the present invention, the photocuring agent may include a vinyl group, a styrene group, a methacrylate group, a cinnamate group, an acrylic group, or an acrylate group.

The crosslinker can be cured by heat to increase the rigidity of the alignment layer and increase the thermal and chemical resistance of the alignment layer. The crosslinker may include an aromatic epoxy group. The crosslinker can crosslink a polyimide portion and a polyethylene portion in the process of forming the alignment layer. The crosslinker can be formed between polyimide and polyimide or between polyethylene and polyethylene. The crosslinker can suppress vertical alignment group compounds or pretilt-inducing group compounds from being agglomerated, and thereby being separated into polyimide and polyethylene portions. The crosslinker may include a monomer represented by Formula D4-I below.

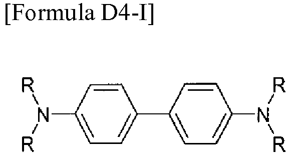

In Formula D4-I, R may be an epoxy group, an acrylate group, a methacrylate group, or O.

According to the present invention, the crosslinker may include a substance represented by Formula D4-I-1, Formula D4-I-2, or Formula D4-I-3 below.

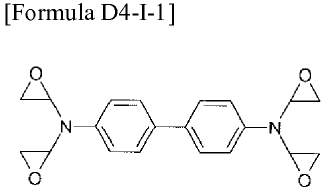

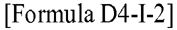

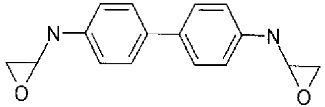

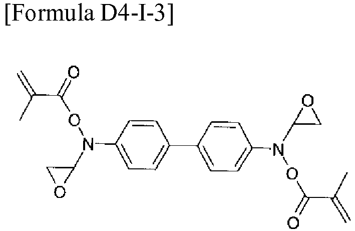

Because the crosslinker 38 including the substance represented by Formula D4-I-1 is formed between polyimide and polyimide or between polyethylene and polyethylene, it can suppress excessive separation into polyimide and polyethylene portions. The crosslinker including the substance represented by Formula D4-I-2 can be bonded to the photocuring agents and polyimide to suppress excessive phase separation into polyimide and polyethylene portions. In the substance represented by Formula D4-I-3, acrylate may be bonded to the photocuring agents, and epoxy may be bonded to the polyimide portion.

The above-mentioned main chains may be replaced by at least one substance selected from the group consisting of polyamic acid, polyamide, polyamicimide, polyester, polyethylene, polyurethane, polystyrene, and a mixture thereof.

Hereinafter, a method of manufacturing a liquid crystal display panel assembly will be described in detail with reference to FIGS. 1 to 4. FIG. 1 is a flowchart for explaining a method of manufacturing a liquid crystal display panel assembly having an SC-VA (surface-controlled vertical alignment) mode. FIGS. 2A to 2E are sectional views sequentially illustrating some processes of forming a lower-panel alignment layer of a liquid crystal display panel assembly in an SC-VA mode according to an exemplary embodiment of the present invention. Because an alignment layer composition 10 may include polyamic acid bonded to vertical alignment groups and polyethylene bonded to photocuring agents, as described above, an alignment layer formed by such an alignment layer composition can uniformly align liquid crystal molecules.

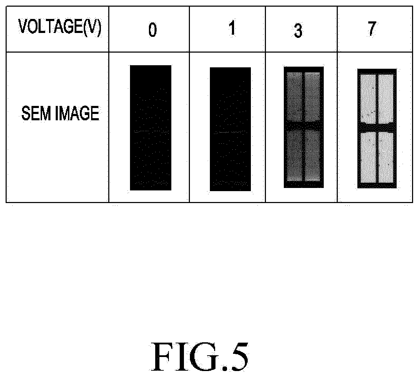

In steps S210 and 220 shown in FIG. 1, a lower display panel having a pixel electrode 191 and an upper display panel having a common electrode are manufactured. The upper and lower display panels may be manufactured by methods disclosed in Korean Patent Application Publication No. 10-2011-0111227, published on October 10, 2011, and U.S. Patent Application Publication No. 2011-0242443, published on October 6, 2011, both of which are assigned to the present applicant. In this experimental example, the upper and lower display panels were manufactured by the method of FIGS. 1 to 5A and 5B disclosed in Korean Patent Application Publication No. 10-2011-0111227, published on October 10, 2011. The components not shown in the accompanying drawings, for example, components expressed by the terms "liquid crystal display panel assembly", "lower display panel", "upper display panel", "common electrode", "lower-panel alignment layer", "liquid crystal molecule", "micro branch", and "upper-panel alignment layer", will be easily understood through reference numerals designating the same components expressed by the corresponding terms in Korean Patent Application Publication No. 10-2011-0111227, published on October 10, 2011, which is assigned to the present applicant.

In steps S231 and S232 shown in FIG. 1, an alignment layer composition 10 for forming an alignment layer is applied to the pixel electrode and/or the common electrode, and then is subjected to heat treatment. Hereinafter, steps S231 and S232 will be described in detail with reference to FIGS. 2Aa to 2Ee. As shown in FIG. 2Aa, an alignment layer composition 10 may be coated on the pixel electrode 191 and/or the common electrode (not shown) by an inkjet method, a roll printing method, or the like. In FIGS. 2A to 2E, upper layers other than the pixel electrode 191 are omitted. According to an exemplary embodiment of the present invention, the alignment layer composition 10 may come into direct contact with a spacer, a color filter, or an insulating layer in some regions.

Reference will now be made in detail to the alignment layer composition 10 that was used to manufacture the alignment layer of the liquid crystal display panel assembly according to an exemplary embodiment of the present invention. Both the alignment layer composition 10 as described below and the alignment layer composition 10 as described above may be used to manufacture the alignment layer of the liquid crystal display panel assembly. According to an exemplary embodiment of the present invention, the alignment layer composition 10 used in this experimental example was a composition including about 4 wt % of solid contents and about 96 wt % of solvent. The solid contents were a mixture of about 67 wt % of vertical alignment group compound, about 26 wt % of pretilt-inducing group compound, and about 7 wt % of crosslinker.

The vertical alignment group compound was a compound including vertical alignment groups bonded to polyamic acid. The polyamic acid bonded to the vertical alignment groups was formed by the reaction of about 50 mol % of dianhydride-based monomer and about 50 mol % of diamine-based monomer. About 40 mol % of aromatic diamine-based monomer and about 10 mol % of vertical alignment group substituted aromatic diamine-based monomer were included in the about 50 mol % of diamine-based monomer. The dianhydride-based monomer was a monomer including

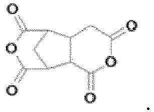

The aromatic diamine-based monomer included in the diamine-based monomer was a monomer including 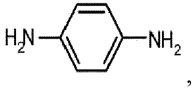 and the vertical alignment group substituted aromatic diamine-based monomer was a monomer including 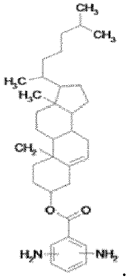 Also, the vertical alignment group substituted aromatic diamine-based monomer was a monomer including a cholesterol group as the vertical alignment group. The pretilt-inducing group compound was a compound including polyethylene and 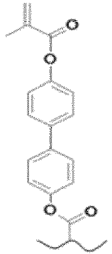 bonded to the polyethylene. Also, the pretilt-inducing group compound was a compound including biphenyl as the spacer portion and methacrylate as the photoreactive group portion. The crosslinker was a crosslinker including 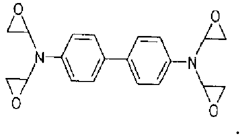 The solvent was mixed solvent of N-vinylpyrrolidone (NMP) and butyl cellulose mixed at a ratio of about 1:1. In order to coat the alignment layer composition 10 by an inkjet method, the alignment layer composition 10 was appropriately mixed with the solvent.

Referring to FIG. 2B, the alignment layer composition 10 may undergo a primary heating. This primary heating may be carried out at about 80°C to about 110°C for about 100 seconds to about 140 seconds. In the primary heating, the solvent of the alignment layer composition 10 is vaporized, and imidization progresses. By the imidization in the primary heating, the alignment layer composition 10 may have an imidization ratio of about 50% to about 70%. The imidization ratio is a numerical value indicating the ratio of the number of imide ring structures to the total of the number of amic acid structures and the number of imide ring structures in polyimide, which is expressed in percentages. In this experimental example, the primary heating was carried out at about 95°C for about 120 seconds.

As shown in FIG. 2C, the vertical alignment groups 41 included in the vertical alignment group compound and the photocuring agents 43 included in the pretilt-inducing group compound are released into the air layer. According to an exemplary embodiment of the present invention, the vertical alignment groups 41 and the photocuring agents 43 may have hydrophobicity. In the primarily heated alignment layer composition 10, the relative amount of polyethylene 33b and polyimide 33a may gradually vary along the thickness direction of the alignment layer composition 10.

According to an exemplary embodiment of the present invention, an amount of polyethylene may exceed an amount of the polyimide or polyamic acid as a distance from an aligning functional layer 41, 43 decreases, which is where the vertical alignment groups 41 and the photocuring agents 43 are mainly distributed. The amount of polyimide or polyamic acid may exceed the amount of the polyethylene as the distance from the aligning functional layer 41, 43 increases.

According to an exemplary embodiment of the present invention, in the primarily heated alignment layer composition 10, the relative amount of the polyethylene and the polyimide may gradually vary depending on the distance from the aligning functional layer 41, 43. This gradual variation in the relative amount of the polyethylene and the polyimide may vary depending on the relative polarity of the polyethylene and the polyimide. According to a exemplary embodiment of the present invention, the polyethylene may have hydrophobicity, and the polyimide may have hydrophilicity. The crosslinker 38 is cured during the primary heating, and can suppress excessive separation of the polyimide and polyethylene groups. The polyethylene and the polyimide may be uniformly distributed in the primarily heated alignment layer composition 10.

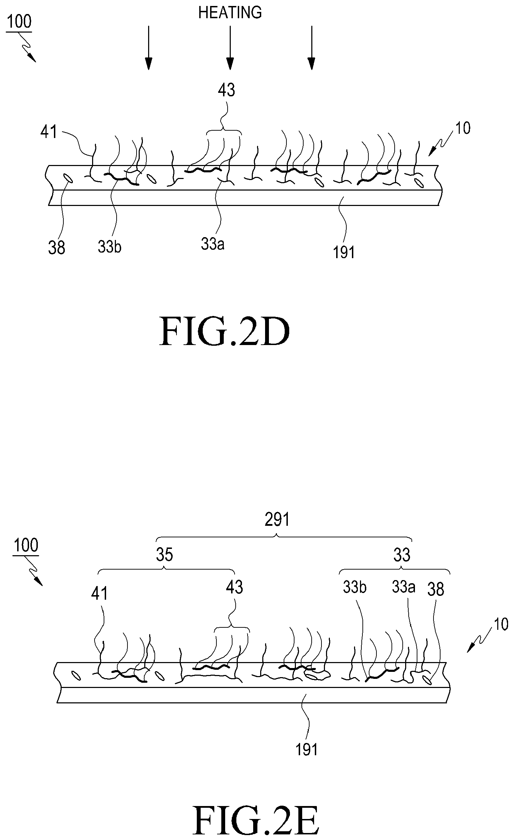

Referring to FIG. 2D, the alignment layer composition 10 is subjected to a secondary heating. This secondary heating may be carried out at about 200°C to about 240°C for about 1000 seconds to about 1400 seconds. Referring to FIG. 2E, imidization progresses in the secondary heating. After the secondary heating, the alignment layer composition 10 may have an imidization ratio of about 70% or more. The crosslinker 38 is cured by heat, and can enhance the rigidity of the alignment layer and can suppress excessive phase separation into the polyimide 33a and the polyethylene 33b. As described above, the rigid spacer portions bonded to the photocuring agents may be slightly vibrated by heating (for example, during the primary heating and the secondary heating). Accordingly, the rigid spacers may inhibit curing of the photocuring agents during the primary and/or secondary heating. In this experimental example, the secondary heating was carried out at about 220°C for about 1000 seconds. After the secondary heating process, the alignment layer composition 10 is washed and dried. In the washing process, the alignment layer composition 10 may be washed with deionized water (DIW), and may be further washed with isopropyl alcohol (IPA). In this experimental example, the alignment layer composition 10 was washed with pure water and then was dried.

In step S240, an upper-plate common voltage applying point (not shown), a sealant (not shown), and a liquid crystal layer 3 are formed between the lower display panel 100 and the upper display panel (not shown), and then the display panels are assembled. The assembled lower display panel 100 and upper display panel may be annealed by heating in a chamber at about 100°C to about 120°C for about 60 minutes to about 80 minutes. The respective processes in step S240 are disclosed in Korean Patent Application Publication No. 10-2011-0111227, published on October 10, 2011, and U.S. Patent Application Publication No. 2011-0242443, published on October 6, 2011, both of which are assigned to the present applicant. In this experimental example, the annealing was carried out at about 110°C for about 2 hours. During the annealing, the sealant was cured.

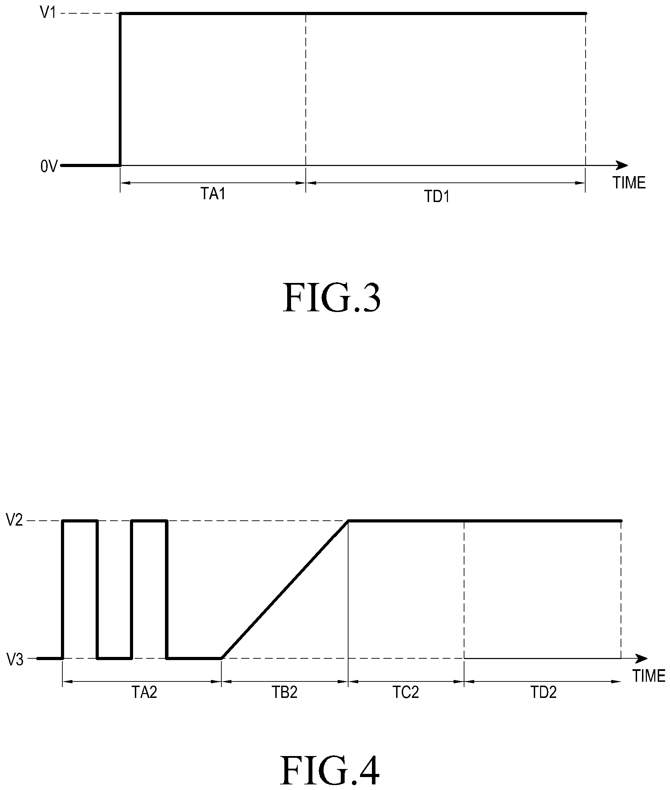

In step S250, exposure voltages are supplied to the assembled display panels, and alignment layers with a pretilt angle are formed by a field exposure process. The lower-panel alignment layer is formed on the lower display panel 100, and the upper-panel alignment layer (not shown) is formed on the upper display panel. After the annealing, in step S252, exposure voltages are supplied to the assembled display panels, and an electric field is formed in the liquid crystal layer 3. The electric field in the liquid crystal layer 3 may be formed by a method of supplying a DC (direct current) voltage and a method of supplying a multi-step voltage. A method of supplying a DC voltage is shown in FIG. 3. When a predetermined first voltage V1 is supplied to gate lines (not shown) and data lines (not shown) of the lower display panel for a time period "TA1", subpixel electrodes (not shown) are provided with the first voltage V1. At this time, a ground voltage or a voltage of about zero volts (0V) is supplied to the common electrode of the upper display panel. The time period "TA1" may be about 1 second to about 300 seconds. Alternatively, the ground voltage or a voltage of zero volts (0V) may be supplied to the gate lines and the data lines, and the predetermined first voltage V1 may be supplied to the common electrode.

Subsequently, a predetermined exposure voltage is supplied for a time period "TD1" in which light is irradiated to the assembled display panels, whereby the liquid crystal molecules are aligned in a stable state. During this time period, the field exposure process is performed. The exposure voltage may be the same as the first voltage V1 in the time period "TA1". The time period "TD1" may be about 50 seconds to about 150 seconds. A method of aligning the liquid crystal molecules in the liquid crystal layer in the time periods "TA1" and "TD1" is disclosed in Korean Patent Application Publication No. 10-2011-0111227, published on October 10, 2011, and U.S. Patent Application Publication No. 2011-0242443, published on October 6, 2011, both of which are assigned to the present applicant.

Next, a method of supplying a multi-step voltage will be described in detail with reference to FIG. 4. If any one of predetermined second voltages V2, V3 is supplied to the gate lines and the data lines for a time period "TA2", the second voltage is supplied to the subpixel electrodes. The other of the predetermined second voltages V2, V3 is supplied to the common electrode. The second voltages are voltages applied in the time period "TA2". The second voltages have a frequency of about 0.1 Hz to about 120 Hz. The voltage V2 may be greater than the maximum operating voltage of the liquid crystal display device, and may be about 5V to about 60V. The voltage V3 may be the ground voltage or a voltage of zero volts (0V). The time period "TA2" may be about 1 second to about 300 seconds. Subsequently, a voltage gradually increasing from the voltage V3 to the voltage V2 is supplied for a time period "TB2", whereby the liquid crystal molecules (not shown) are sequentially aligned. The time period "TB2" may be about 1 second to about 100 seconds. Next, in a time period "TC2", the liquid crystal molecules are tilted in a direction parallel to the longitudinal direction of micro branches (not shown) of the pixel electrode, and then the arrangement of the liquid crystal molecules is stabilized. The time period "TC2" may be about 1 second to about 600 seconds. During the time period "TC2", the voltage V2 may be consistently supplied. Subsequently, in a time period "TD2, a predetermined exposure voltage is supplied to the assembled display panels, during which the field exposure process is performed. The time period "TD2" may be about 80 seconds to about 200 seconds. The exposure voltage may be the same as the voltage V2. A method of aligning the liquid crystal molecules in the liquid crystal layer in the time periods "TA2", "TB2", "TC2", and "TD2" is disclosed in Korean Patent Application Publication No. 10-2011-0111227, published on October 10, 2011, and U.S. Patent Application Publication No. 2011-0242443, published on October 6, 2011, both of which are assigned to the present applicant.

According to an exemplary embodiment of the present invention, the time period "TA2" may be omitted. In this experimental example, the electric field was formed in the liquid crystal layer by the multi-step voltage supplying method in which the time period "TA2" is omitted. The time period "TB2" was about 25 seconds to about 35 seconds. Also, in this experimental example, two stages were included in the time period "TB2". In stage 1, a voltage increasing from the voltage V3 to a medium voltage was supplied for a stage 1 time. In stage 2, a voltage increasing from the medium voltage to the voltage V2 was supplied for a stage 2 time. In this experimental example, the medium voltage was about 5 volts (5V), the stage 1 time was about 20 seconds, the voltage V2 was about 23 volts (23V), and the stage 2 time was about 10 seconds.

In step S254, the alignment layers are formed by irradiating light to the assembled display panels while the exposure voltage is applied. The field exposure process in which light is irradiated while the electric field is formed in the liquid crystal layer is performed, whereby the alignment layers are formed. Each of the lower-panel alignment layer 291 and the upper-panel alignment layer (not shown) includes a main alignment layer 33 and an aligning functional layer 35. According to an exemplary embodiment of the present invention, the main alignment layer 33 mainly includes the main chains of the vertical alignment group compound and the pretilt-inducing group compound (for example, polyethylene and polyimide) and the cured crosslinker 38.

According to an exemplary embodiment of the present invention, the aligning functional layer 35 mainly includes substances for aligning liquid crystal molecules. According to an exemplary embodiment of the present invention, the aligning functional layer 35 includes the vertical alignment groups 41 included in the vertical alignment group compound and the photocuring agents 43 included in the pretilt-inducing group compound, which are cured to be pretilted.

During the time period "TD1" or "TD2" in which the electric field is formed in the liquid crystal layer, light is radiated to the liquid crystal layer and the heat-treated alignment layer composition 10. By the radiated light, the photocuring agents are crosslinked to each other and are cured so as to be pretilted. When the electric field and light applied to the liquid crystal layer are removed, the lower-panel alignment layer 291 is formed on the lower display panel, and the upper-panel alignment layer is formed on the upper display panel. The light may be irradiated in any one or both directions of a lower substrate (not shown) and an upper substrate (not shown).

According to an exemplary embodiment of the present invention, the light may be incident in the direction of one of the substrate of the lower display panel 100 and the substrate of the upper display panel, in which there are fewer layers absorbing or blocking the light. For example, the photocuring light may be irradiated in the direction of the upper substrate for the structure of FIGS. 22a to 22d and may be irradiated in the direction of the lower substrate for the structure of FIGS. 22e to 22h disclosed in Korean Patent Application Publication No. 10-2011-0111227, published on October 10, 2011, and U.S. Patent Application Publication No. 2011-0242443, published on October 6, 2011, both of which are assigned to the present applicant. The radiated light may be collimated UV, polarized UV, or non-polarized UV. The light may have a wavelength of about 300 nm to about 400 nm and an energy of about 0.5 J/cm² to about 40 J/cm². The lights hardening the photocuring agent and the sealant may be different in wavelength and energy. In this experimental example, the UV intensity in the field exposure process was 6.5 J/cm².

Hereinafter, a mechanism in which the photocuring agents are cured and a method of aligning the liquid crystal molecules to be pretilted will be described in detail. When the electric field is formed in the liquid crystal layer 3, the liquid crystal molecules are aligned by the electric field according to their characteristics, and the vertical alignment groups 41 and the photocuring agents 43 included in the aligning functional layer 35are aligned in substantially the same direction as that of the liquid crystal molecules by the alignment of the liquid crystal molecules. When the field exposure process is performed in the state where the vertical alignment groups 41 and the photocuring agents 43 are aligned, the photocuring agents form a network because the photoreactive group portions included in the photocuring agents are crosslinked to each other.

When the photoreactive group portions (for example, alkenes) are exposed to light (for example, UV), their double bonds are unfastened and they are crosslinked to neighboring photoreactive group portions. Because the photocuring agents are cured and form a network in the presence of the electric field, the cured photocuring agents are aligned to be pretilted. Accordingly, the liquid crystal molecules 31 adjacent to the aligning functional layer 35are aligned in a direction slightly tilted with respect to the normal direction of the lower substrate. As a result, the liquid crystal molecules 31 adjacent to the aligning functional layer 35have a pretilt angle in a tilt direction parallel with the longitudinal direction of the micro branches 197 of the pixel electrode 191 even in the state where no electric field is applied to the liquid crystal layer 3, and are aligned to be pretilted. The liquid crystal molecules may be tilted at a pretilt angle of about 0.5 degrees to about 3 degrees with respect to the normal direction.

According to an exemplary embodiment of the present invention, because the polyethylene bonded to the photocuring agents has short-chain-length monomer units, more photocuring agents may be linked to the polyethylene main chain. Thus, the crosslinking rate of the photocuring agents may be increased in the curing process. If the crosslinking rate is increased or the density of the photocuring agents is high, the liquid crystal molecules can be aligned to be uniformly pretilted. In other words, a liquid crystal display device having an alignment layer, which is formed by photocuring agents bonded to polyethylene, can have superior display quality. In order to cure the uncured photocuring agents, a fluorescence exposure process may be performed. This fluorescence exposure process is disclosed in Korean Patent Application Publication No. 10-2011-0111227, published on October 10, 2011, and U.S. Patent Application Publication No. 2011-0242443, published on October 6, 2011, both of which are assigned to the present applicant.

In this experimental example, the fluorescence exposure process was omitted. The cell interval of the liquid crystal display device was about 3.0 µm. The liquid crystal display device was operated by charge sharing-based 1 gate line 1 data line (1G1D) driving, which is described with reference to FIG. 11 disclosed in Korean Patent Application Publication No. 10-2011-0111227, published on October 10, 2011, and U.S. Patent Application Publication No. 2011-0242443, published on October 6, 2011, both of which are assigned to the present applicant. The liquid crystal display device manufacture in this way was photographed by a scanning electron microscope, as shown in FIG. 5. FIG. 5 illustrates scanning electron microscope (SEM) images obtained by photographing one pixel PX of a liquid crystal display device, manufactured as described above, according to the level of electric field formed in its liquid crystal layer. The images shown in FIG. 5 are images of one pixel PX photographed when the voltage applied to the liquid crystal layer was zero volts (0V), 1 volts (1V), 3 volts (3V), and 7 volts (7V). As seen from FIG. 5, the brightness of the pixel PX was increased and texture defects were reduced with an increase in the level of electric field applied to the liquid crystal layer. Further, the rising response time of the liquid crystal display device was about 7.0 milliseconds (7 ms), and the falling response time of the liquid crystal display device was 2.6 milliseconds (2.6 ms). In this way, the manufactured liquid crystal display device had a fast response time and superior quality.

According to the present invention as described above, a liquid crystal display device having improved side visibility and display quality is provided.

## Claims

1. An alignment layer comprising:
a first main chain comprising a first substance and photocuring agents bonded to the first substance; and
a second main chain disposed on a substrate and comprising a second substance and vertical alignment groups bonded to the second substance,
wherein the photocuring agents are crosslinked to each other and aligned at a pretilt angle with respect to the substrate, the vertical alignment groups are aligned vertically to the substrate, and the first and second substances are different from each other,
wherein the first substance comprises polyethylene having hydrophobicity and the second substance comprises polyimide having hydrophilicity, and
wherein a crosslinker is bonded to the photocuring agents and polyimide,
**characterized in that**
the crosslinker includes a substance represented by the following formula:

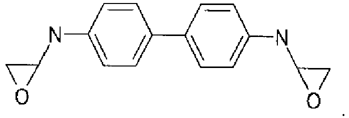

2. The alignment layer as claimed in claim 1, wherein relative amounts of the first substance and the second substance vary along a thickness direction of the alignment layer.

3. The alignment layer as claimed in claim 1, wherein each of the photocuring agents comprises a photoreactive group portion that is crosslinked by light, and a spacer portion comprising a cyclic compound.

4. The alignment layer as claimed in claim 3, wherein the photocuring agents comprise the following formula:

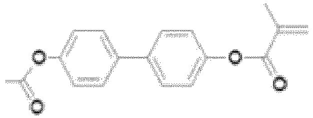

5. The alignment layer as claimed in claim 1, wherein the vertical alignment groups comprise the following formula:

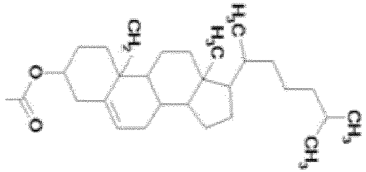

6. The alignment layer as claimed in claim 2, further comprising an aligning functional layer in which the vertical alignment groups and the photocuring agents are mainly distributed,
wherein an amount of the first substance exceeds an amount of the second substance as a distance from an aligning functional layer decreases, and the amount of the second substance exceeds the amount of the first substance as the distance from the aligning functional layer increases.

## Patentansprüche

1. Ausrichtungsschicht, umfassend:
eine erste Hauptkette, umfassend eine erste Substanz und Photohärtungsmittel, die an die erste Substanz gebunden sind; und
eine zweite Hauptkette, die auf einem Substrat angeordnet ist und eine zweite Substanz sowie vertikale Ausrichtungsgruppen, die an die zweite Substanz gebunden sind, umfasst,
wobei die Photohärtungsmittel miteinander vernetzt und mit einem Vorneigungswinkel in Bezug auf das Substrat ausgerichtet sind, die vertikalen Ausrichtungsgruppen vertikal am Substrat ausgerichtet sind und die erste und zweite Substanz sich voneinander unterscheiden,
wobei die erste Substanz Polyethylen umfasst, das eine Hydrophobizität aufweist, und die zweite Substanz Polyimid umfasst, das eine Hydrophilizität aufweist, und
wobei ein Vernetzungsmittel an die Photohärtungsmittel und das Polyimid gebunden ist,
**dadurch gekennzeichnet, dass**
das Vernetzungsmittel eine Substanz beinhaltet, die durch die folgende Formel dargestellt ist:

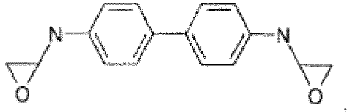

2. Ausrichtungsschicht nach Anspruch 1, wobei relative Mengen der ersten Substanz und der zweiten Substanz entlang einer Dickenrichtung der Ausrichtungsschicht variieren.

3. Ausrichtungsschicht nach Anspruch 1, wobei jedes der Photohärtungsmittel einen photoreaktiven Gruppenteil, der durch Licht vernetzt ist, und einen Distanzteil, der eine cyclische Verbindung umfasst, umfasst.

4. Ausrichtungsschicht nach Anspruch 3, wobei die Photohärtungsmittel die folgende Formel umfassen:

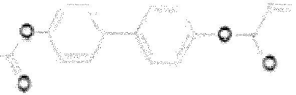

5. Ausrichtungsschicht nach Anspruch 1, wobei die vertikalen Ausrichtungsgruppen die folgende Formel umfassen:

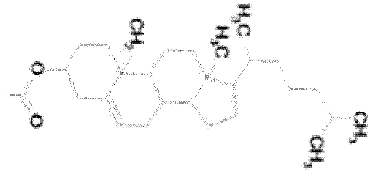

6. Ausrichtungsschicht nach Anspruch 2, ferner umfassend eine ausrichtende funktionelle Schicht, in der die vertikalen Ausrichtungsgruppen und die Photohärtungsmittel hauptsächlich verteilt sind,
wobei eine Menge der ersten Substanz eine Menge der zweiten Substanz überschreitet, wenn ein Abstand von einer ausrichtenden funktionellen Schicht abnimmt, und die Menge der zweiten Substanz die Menge der ersten Substanz überschreitet, wenn der Abstand von der ausrichtenden funktionellen Schicht zunimmt.

## Revendications

1. Couche d'alignement comprenant :
une première chaîne principale comprenant une première substance et des agents de photodurcissement liés à la première substance ; et
une seconde chaîne principale disposée sur un substrat et comprenant une seconde substance et des groupes d'alignement vertical liés à la seconde substance,
dans laquelle les agents de photodurcissement sont réticulés les uns avec les autres et alignés selon un angle de pré-inclinaison par rapport au substrat, les groupes d'alignement vertical sont alignés verticalement au substrat, et les première et seconde substances sont différentes l'une de l'autre,
dans laquelle la première substance comprend du polyéthylène ayant une hydrophobie et la seconde substance comprend du polyimide ayant une hydrophilie, et
dans laquelle un réticuleur est lié aux agents de photodurcissement et au polyimide,
**caractérisée en ce que**
le réticuleur inclut une substance représentée par la formule suivante :

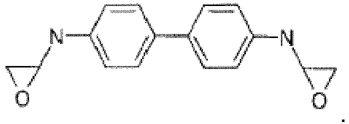

2. Couche d'alignement selon la revendication 1, dans laquelle des quantités relatives de la première substance et de la seconde substance varient suivant une direction d'épaisseur de la couche d'alignement.

3. Couche d'alignement selon la revendication 1, dans laquelle chacun des agents de photodurcissement comprend une portion de groupe photoréactif qui est réticulée par la lumière, et une portion d'espacement comprenant un composé cyclique.

4. Couche d'alignement selon la revendication 3, dans laquelle les agents de photodurcissement comprennent la formule suivante :

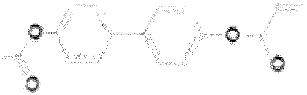

5. Couche d'alignement selon la revendication 1, dans laquelle les groupes d'alignement vertical comprennent la formule suivante :

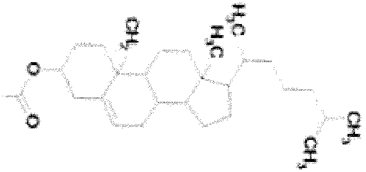

6. Couche d'alignement selon la revendication 2, comprenant en outre une couche fonctionnelle d'alignement dans laquelle les groupes d'alignement vertical et les agents de photodurcissement sont principalement répartis,
dans laquelle une quantité de la première substance excède une quantité de la seconde substance à mesure qu'une distance à une couche fonctionnelle d'alignement diminue, et la quantité de la seconde substance excède la quantité de la première substance à mesure que la distance de la couche fonctionnelle d'alignement augmente.
